Europäisches Patentamt

European Patent Office

Office européen des brevets

(11) Publication number: **0 364 671 B1**

# EUROPEAN PATENT SPECIFICATION

(45) Date of publication of patent specification: **12.01.94** (51) Int. Cl.5: **B01D 17/05**, B01D 17/02

(21) Application number: **89112408.3**

(22) Date of filing: **07.07.89**

(54) **Apparatus and process for drying liquid.**

(30) Priority: **21.10.88 JP 263880/88**

(43) Date of publication of application:
**25.04.90 Bulletin 90/17**

(45) Publication of the grant of the patent:
**12.01.94 Bulletin 94/02**

(84) Designated Contracting States:
**DE FR GB IT**

(56) References cited:
**EP-A- 0 211 659     AT-B- 214 412**
**DE-A- 2 839 432     DE-A- 3 446 688**
**GB-A- 2 060 683     GB-A- 2 101 900**

(73) Proprietor: **MITSUBISHI JUKOGYO KABUSHIKI KAISHA**
**5-1, Marunouchi 2-chome**
**Chiyoda-ku**
**Tokyo 100(JP)**

(72) Inventor: **Iijima, Masaki**
**5-1, Marunouchi 2-chome**
**Chiyoda-ku Tokyo(JP)**

(74) Representative: **Dr. Fuchs, Dr. Luderschmidt**
**Dr. Mehler, Dipl.-Ing Weiss Patentanwälte**
**Postfach 46 60**
**Abraham-Lincoln-Strasse 7**
**D-65036 Wiesbaden (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to an apparatus for dehydrating a liquid such as a liquid hydrocarbon or the like which is produced in a natural gas treatment plant, a natural gas pressure feed plant, a petroleum refining plant, a petroleum chemical plant or the like.

Heretofore, the dehydrating of the liquid hydrocarbon has usually been carried out by adsorbing water present in the liquid hydrocarbon with molecular sieves.

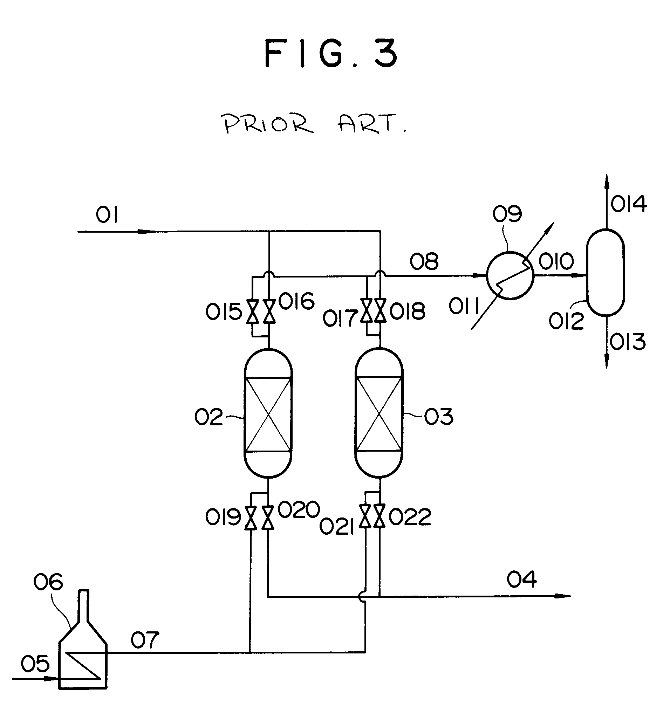

Fig. 3 shows a conventional two-adsorbing column type apparatus for dehydrating a liquid hydrocarbon with molecular sieves.

As exhibited in this drawing, a liquid to be dried 01 is introduced into one of adsorbing columns 02, 03 packed with the molecular sieve which is now performing an adsorbing operation, and water in the liquid to be dehydrated is adsorbed by the molecular sieve and the dehydrated liquid 04 is taken out of the system. At this time, in the other adsorbing column, the recovery operation of the molecular sieve is carried out.

The molecular sieve on which water is adsorbed are recovered by a high-temperature gas. A gas 05 for recovering the molecular sieve is heated up to a level of about 250 to about 300°C in a recovery gas heating furnace 06, and a heated gas for recovery 07 is then forwarded to the adsorbing column in which the recovery operation of the molecular sieve is performed. A gas 08 by which the molecular sieve have been recovered is afterwards cooled to ordinary temperatures or so by means of a cooling device 09. This cooled gas 08 is then forwarded to a gas/liquid separator 012, in which water is removed therefrom, and the gas 014 is then discharged from the system.

On pipes for the liquid to be dried 01, the dried liquid 04, the gas for recovery 05 and the gas 08 by which the molecular sieve have been recovered, switching valves 015 to 022 are disposed, as shown in Fig. 3. These valves are controllable to perform the above-mentioned operation.

In the adsorbing columns 02, 03 in which the adsorption and recovery operations are carried out, the following steps are recycled in sequence:

Adsorption - discharge of a liquid - reduction in pressure - heating - cooling - application of pressure - charge of a liquid - waiting.

However, the conventional apparatus for drying the liquid, in which the molecular sieve and the like are utilized, has the following drawbacks:

(1) To recover the dehydrating agent by which water has been adsorbed, a great deal of gas is necessary. When the gas by which the dehydrating agent has been recovered cannot be reused, this gas is discarded in vain.

(2) For the heating of the gas for recovery, a large amount of heat source is required.

(3) In the adsorbing columns, the operations of the adsorption and recovery must be carried out alternately. In consequence, many switching valves and pipes are required, as shown in Fig. 3, and thus the operations of using these valves are complex and troublesome.

A different process has been disclosed in the DE-A-28 39 432 for the dehydrating of gaseous mixtures containing condensable hydrocarbon. The gaseous mixture comprising predominantly hydrocarbons having 1 to 3 carbon atoms, is fed to a washing column at the bottom thereof and a washing liquid, preferably glycol, is introduced at the head of the washing column. Furthermore the DE-A-28 29 432 discloses that the glycol adsorbs the water contained in the gaseous mixture, that the hydrocarbons condensed during the washing process are separated from the glycol charged with water and that the charged glycol may be regenerated. According to the DE-A-28 29 432 efforts are emphasized to minimize losses of washing glycol. In the embodiment according to the example of the DE-A-28 29 432 the water content of the hydrocarbon mixture is reduced from 3400 ppm to some few ppm. However, to achieve this goal 9000 kg/h triethylene glycol have to be introduced into the washing column in order to dehydrate 160 000 kg/h of gas mixture.

## 3. OBJECT AND SUMMARY OF THE INVENTION

An object of the present invention is to provide an apparatus and process for dehydrating a liquid by which the above-mentioned problems of conventional ones can be solved.

For the purpose of solving the above-mentioned problems, the apparatus for dehydrating a liquid of the present invention is constituted as follows:

(1) The apparatus of the present invention is equipped with a mixer for mixing a liquid dehydrating agent with a liquid to be dehydrated, a separator for separating the liquid dehydrating agent and the liquid to be dehydrated in a mixture thereof from each other, a recovery device for recovering the separated liquid dehydrating agent which has been forwarded from the separator, and a feed device for feeding the recovered liquid drying agent to the mixer, wherein the separator is arranged so that the mixture is forwarded from the mixer to the separator and wherein the separator is a separator in which a difference between gravities is utilized.

(2) Furthermore, in the apparatus for dehydrating a liquid referred to in the above paragraph (1), a plurality of sections each comprising the mixer and the separator are arranged in series so that the liquid dehydrating agent separated in the separator on the downstream side may be fed to the mixer on the upstream side.

According to a process of the present invention in the apparatus of the present invention described in the above paragraph (1), the liquid to be dehydrated containing water is mixed with the liquid dehydrating agent in the mixer, whereby water present in the liquid to be dehydrated is absorbed by the liquid dehydrating agent.

A mixture of the liquid from which water has been removed by the absorption of the liquid dehydrating agent and the liquid dehydrating agent containing the absorbed water is forwarded to the separator, and these liquids are separated from each other therein. Afterward, the dehydrated liquid is taken out of the system.

On the other hand, the liquid dehydrating agent containing the absorbed water is forwarded to the recovery device, and water is then removed therefrom in this device. Afterward, the water-free dehydrating agent is returned to the mixer and is then used again.

According to the present invention, the liquid to be dehydrated can be dehydrated by the successive fluid operations of the simple apparatus, and furthermore, the apparatus of the present case is simplified and the operation of the apparatus can be facilitated. In addition, the gas for recovery used in the recovery device regarding the present invention can fulfil its role in a small amount, and a large amount of a heat source is unnecessary.

According to the constitution described in the above paragraph (2) of the present invention, the plural sections each comprising the mixer and the separator are arranged in series in the apparatus for dehydrating a liquid described in the above paragraph (1), and therefore the liquid to be dehydrated can be dehydrated sufficiently. In addition, the liquid dehydrating agent, by which water in the liquid to be dehydrated having a lower water content has been absorbed on the downstream side, is fed to the mixer on the upstream side, so that water in the liquid to be dehydrated having a higher water content is absorbed by the fed liquid dehydrating agent. In consequence, the liquid dehydrating agent can be effectively used, and the dehydrating of the liquid to be dehydrated can be achieved efficiently.

Fig. 1 is a system diagram of a first embodiment of the present invention,

Fig. 2 is a system diagram of a second embodiment of the present invention, and

Fig. 3 is a system diagram of a conventional liquid-drying apparatus in which molecular sieves are used.

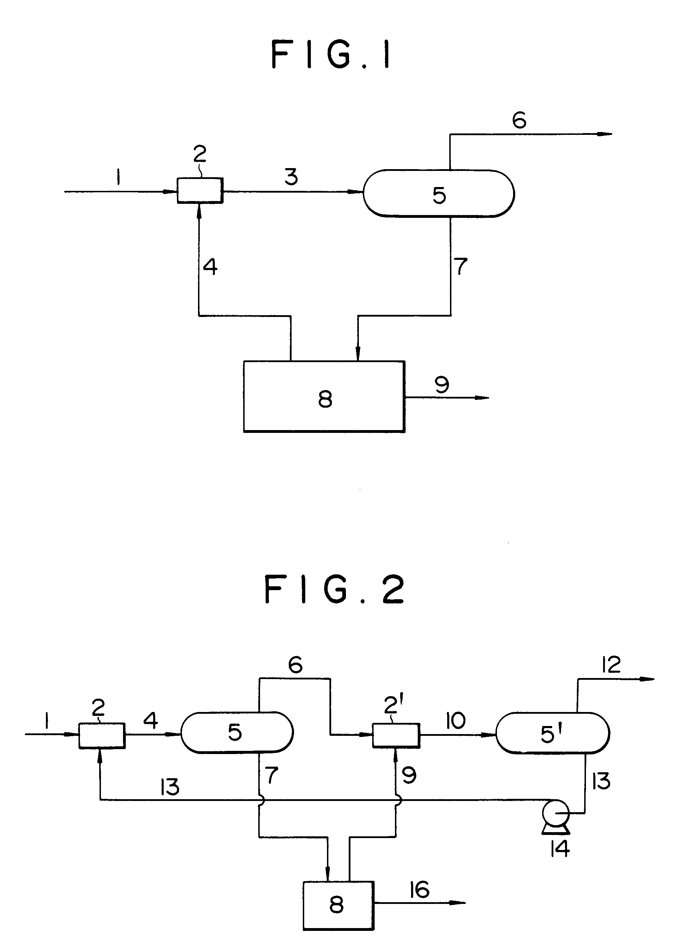

A first embodiment of the present invention will be described in reference to Fig. 1.

Reference numeral 1 is a liquid to be dehydrated such as a liquid hydrocarbon containing water, and numeral 2 is a mixer to which the liquid to be dehydrated is fed. To the mixer 2, a recovered liquid dehydrating agent 4 is delivered from a recovery device 8 for the liquid dehydrating agent. A mixture 3 is forwarded to a liquid/liquid separator 5, where the dehydrated liquid 6 and the liquid dehydrating agent 7 containing the absorbed water are then separated from each other. The dehydrated liquid 6 is taken out from the system, and the liquid dehydrating agent 7 containing the absorbed water is fed to the recovery device 8.

As the above-mentioned mixer 2, there is used any of a liquid/liquid mixing valve, a static mixer, a liquid/liquid mixing nozzle and a combination thereof.

As the above-mentioned liquid/liquid separator 5, there is used any of a separator in which a difference between gravities is utilized, a parallel plate separator packed with plate-shaped contents, a corrugated plate separator, a cohesion separator called a coalescer , a cohesion separator in which electrodes are used, and a combination thereof.

Furthermore, as the recovery device 8, there is used a device called a dehydrator which is used to remove moisture from a gas.

In this embodiment, the liquid to be dehydrated 1 containing water is mixed with the liquid dehydrating agent 4 in the mixer, so that water present in the liquid to be dehydrated 1 is absorbed by the liquid dehydrating agent.

The mixture 3 of the liquid to be dehydrated from which water has been removed by the absorption of the liquid dehydrating agent and the liquid dehydrating agent containing the absorbed water is then forwarded to the liquid/liquid separator 5, and these liquids are separated to each other therein. The dehydrated liquid 6 is taken out from the system, and on the other hand, the liquid dehydrating agent 7 containing the absorbed water is forwarded to a liquid dehydrating agent recovery device 8.

In the recovery device 8, water 9 is removed from the liquid dehydrating agent 7 containing the absorbed water so as to recover the liquid dehydrating agent, and the thus recovered liquid dehydrating agent is delivered to the mixer 2 again.

In this way, the liquid to be dehydrated 1 containing water is mixed with the liquid dehydrating agent in the mixer 2, so that water is removed from the liquid to be dehydrated. The water-free liquid is then taken out from the system, and simultaneously the liquid dehydrating agent containing the absorbed water is recovered in the liquid dehydrating agent recovery device 8 and is then recycled.

Examples of the liquid dehydrating agent used in this emobodiment include triethylene glycol, diethylene glycol, monoethylene glycol, tetraethylene glycol and glycerol.

In this embodiment, triethylene glycol is used as the liquid dehydrating agent, and a mixture of propane and butane is used as the liquid to be dried. The conditions and results of the embodiment are set forth in Table 1.

In the mixer 2 composed of a liquid/liquid mixing nozzle and a liquid/liquid mixing valve, the liquid to be dehydrated (a mixture of 50 mole percent of liquid propane, 20 mole percent of liquid normal butane and 30 mole percent of liquid isobutane) containing 360 ppm by weight of water (dissolved water and free water) at a flow rate of 100,000 kg/hour is mixed suffiently with the liquid dehydrating agent (triethylene glycol) having a purity of 99.90% by weight at a flow rate of 2,000 kg/hour, whereby water present in the liquid to be dehydrated is absorbed by the liquid dehydrating agent.

The liquid to be dehydrated and the liquid dehydrating agent in the resulting mixture are separated from each other by means of the liquid/liquid separator 5 composed of a gravity difference type separator and a cohesion separator called a coalescer, and the dehydrated liquid 6 is then taken out from the system. In this case, a water content in the dehydrated liquid 6 is 20 ppm by weight.

On the other hand, the liquid dehydrating agent 7 containing the dehydrated water is forwarded to the liquid dehydrating agent recovery device 8, where the water 9 is then removed therefrom. In this case, the recovery of the liquid dehydrating agent is carried out until its purity has reached 99.90% by weight.

The liquid dehydrating agent recovery device 8 is composed of the following members:

A flush separator, a reboiler, a still column, a stripping column, a surge tank, a filter, an active carbon filter, a heat exchanger, a cooler and a pump.

The liquid dehydrating agent 4 from which water has been removed is delivered to the mixer 2 and is then mixed with the liquid to be dehydrated 1 again.

Table 1

---

**Liquid to be dehydrated**

|  | Liquid | Mixture of propane, normal butane and isobutane |
|---|---|---|
|  |  | Propane | 50 mole percent |
|  |  | Normal butane | 20 mole percent |
|  |  | Isobutane | 30 mole percent |

| Temperature | $20°C$ |
|---|---|
| Pressure | $27.5 \text{ kg/cm}^2$ gauge pressure |
| Flow Rate | 100,000 kg/hour |
| Water Content | 360 ppm by weight |

**Liquid Dehydrating Agent**

| Dehydrating Agent | Triethylene glycol |
|---|---|
| Temperature | $30°C$ |
| Pressure | $27.5 \text{ kg/cm}^2$ gauge pressure |
| Flow Rate | 2,000 kg/hour |
| Purity after Recovery | 99.90% by weight |

**Dehydrated Liquid**

| Water Content | 20 ppm by weight |
|---|---|
| Cohesion Temp. of Water | $-8°C$ |

---

A second embodiment of the present invention will be described in reference to Fig. 2.

In this embodiment, a first section comprising the mixer 2 and the liquid/liquid separator 5 and a second section comprising a mixer 2' and a liquid/liquid separator 5', which are the same as in first embodiment, are arranged in series in the form of 2 steps. A liquid to be dehydrated containing water is fed to the mixer 2 in the first step section, and the liquid dehydrating agent 13 separated in the liquid/liquid separator 5' in the second section is also fed to the mixer 2 by means of a circulating pump 14. The liquid to be dehydrated 6 which has been separated in the liquid/liquid separator 5 is then fed to the mixer 2' in the second section, and the liquid dehydrating agent 7 containing the absorbed water is fed to the liquid dehydrating agent recovery device 8. The recovered liquid dehydrating agent 9 is delivered from the liquid dehydrating agent recovery device 8 to the mixer 2' in the second section. Furthermore, the liquid to be dehydrated 12 separated in the liquid/liquid separator 5' in the second section is then taken out from the system, and the liquid dehydrating agent 13 is returned to the mixer 2 in the first section by means of the circulating pump 14.

In this embodiment, the liquid to be dehydrated 1 is mixed, in the mixer 2 of the first section, with the liquid dehydrating agent 13 separated from the liquid/liquid separator 5' in the second section, whereby water present in the liquid to be dehydrated is absorbed by the liquid dehydrating agent. A mixture 4 of the liquid to be dehydrated and the liquid dehydrating agent is introduced into the liquid/liquid separator 5, where the dehydrated liquid 6 is then separated from the liquid dehydrating agent 7 containing the absorbed water, and the latter 7 is forwarded to the liquid dehydrating agent recovery device 8. The liquid to be dehydrated 6 separated in the liquid/liquid separator 5 and the liquid dehydrating agent 9 recovered in the liquid dehydrating agent recovery device 8 are fed to the mixer 2' in the second section. In this mixer 2', they are mixed, so that water in the liquid to be dehydrated is absorbed by the liquid dehydrating agent in order to further dehydrate the liquid, and the mixture is then forwarded to the liquid/liquid separator 5' in the second section, where the liquid to be dehydrated is then separated from the liquid dehydrating agent. The dehydrated liquid 12 is taken out from the system, and the liquid dehydrating agent 13 separated in the liquid/liquid separator 5' is delivered to the mixer 2 in the first section by means of the liquid dehydrating agent circulating pump 14. The water 16 removed from the liquid dehydrating agent in the liquid dehydrating agent recovery device 15 is discharged from the system.

As understood from the above, this embodiment permits dehydrating the liquid to be dehydrated sufficiently in the two steps, and also permits using the liquid dehydrating agent 13 effectively, because the liquid dehydrating agent 13 absorbs, in the mixer 2' in the second section, water in the liquid to be dehydrated 6 having a lower water content from which water has already roughly removed in the mixer 2 in the first section, and the agent 13 is then separated in the liquid/liquid separator 5' in the second section and is afterward forwarded to the mixer 2 in the first section.

Also in this embodiment, as the liquid dehydrating agent, the same compounds as enumerated in the first embodiment can be used.

In this embodiment, a mixture of propane and butane which is the liquid to be dehydrated is dehydrated by the use of triethylene glycol as the liquid dehydrating agent, and the conditions and results of this embodiment are set forth in Table 2.

In the mixer 2 in the first step composed of a liquid/liquid mixing nozzle and a liquid/liquid mixing valve, the liquid to be dehydrated (a mixture of 50 mole percent of liquid propane, 20 mole percent of liquid normal butane and 30 mole percent of liquid isobutane) containing 360 ppm by weight of water (dissolved water and free water) at a flow rate of 100,000 kg/hour is mixed with the liquid dehydrating agent 13 separated in the liquid/liquid separator 5' in the second section and then forwarded by the liquid dehydrating agent circulating pump 14, whereby water present in the liquid to be dehydrated 1 is absorbed by the liquid drying agent 13.

The liquid to be dehydrated and the liquid dehydrating agent in the resulting mixture are separated from each other by means of the liquid/liquid separator 5 composed of a gravity difference type separator and a cohesion separator called a coalescer, and the liquid to be dehydrated 6 is further mixed with the recovered liquid dehydrating agent 9 having a purity of 99.90% by weight in the mixer 2' in the second section. The liquid dehydrating agent 7 containing the absorbed water which has been separated in the liquid/liquid separator 5 in the first section is forwarded to the liquid dehydrating agent recovery device 8, where the agent 7 is then recovered up to a purity of 99.90% by weight.

The liquid to be dehydrated is further dehydrated by the recovered liquid dehydrating agent in the mixer 2' in the second section and is then separated from the liquid dehydrating agent in the liquid/liquid separator 5' in the second section which is the same as the liquid/liquid separator in the first section. The thus separated water-free liquid is taken out from the system. In this case, a water content in the dried liquid 12 is 10 ppm by weight.

The liquid dehydrating agent separated in the liquid/liquid separator 5' in the second section is then delivered to the mixer 2 in the first section by means of the liquid dehydrating agent circulating pump 14.

## Table 2

---

### Liquid to be Dehydrated

| Liquid | Mixture of propane, normal butane and isobutane |

| | Propane | 50 mole percent |
| | Normal butane | 20 mole percent |
| | Isobutane | 30 mole percent |

| Temperature | 20°C |
| Pressure | 27.5 kg/cm$^2$ gauge pressure |
| Flow Rate | 100,000 kg/hour |
| Water Content | 360 ppm by weight |

### Liquid Dehydrating Agent

| Dehydrating Agent | Triethylene glycol |
| Temperature | 30°C |
| Pressure | 27.5 kg/cm$^2$ gauge pressure |
| Flow Rate | 2,000 kg/hour |
| Purity after Recovery | 99.90% by weight |

### Dehydrated Liquid

| Water Content | 10 ppm by weight |
| Cohesion Temp. of Water | -29°C |

---

In Fig. 3, comparisons are made between amounts of the used recovery gas and the consumed fuel gas in the first embodiment, the second embodiment and a conventional dehydrating apparatus in which molecular sieves are used.

(1) Comparison between amounts of the used recovery gas:

As exhibited in Table 3, in the case that the molecular sieves are used, 5,600 normal m$^3$/hour of the gas is necessary to recover the molecular sieves, whereas in the cases of the first and second embodiments, 45 normal m$^3$/hour of the gas for the recovery of the liquid dehydrating agent is only required.

(2) Comparison between amounts of the consumed fuel gas:

As exhibited in Table 3, in the case that the molecular sieves are used, 130 normal m$^3$/hour of the fuel gas is consumed, whereas in the liquid dehydrating agent recovery device of the first and second embodiments, 13 normal m$^3$/hour of the fuel gas is only required.

(3) Also with regard to consumed amounts of cooling water, mechanical power and the dehydrating agent, a comparison is made in Table 3.

## Table 3

|  | First Embodiment | Second Embodiment | Dehydration by Molecular Sieves |
|---|---|---|---|
| **Liquid to be Dehydrated** | | | |
| Liquid | mixture of propane, normal butane and isobutane | | |
|  | propane 50 mole% n-butane 20 mole% isobutane 30 mole% | the same as left | the same as left |
| Temperature | 20°C | | |
| Pressure | 27.5 kg/cm$^2$ gauge | | |
| Throughput | 100,000 kg/hour | | |
| Water Content | 360 ppm by weight | | |
| **Dehydrating Agent** | | | |
| Name | triethylene glycol | | molecular sieves |
| Circulating Amount | 2,000 kg/hour | the same as left | – |
| Purity after Recovery | 99.90% by weight | | – |

EP 0 364 671 B1

Table 3 (Continued)

| | First Embodiment | Second Embodiment | Dehydration by Molecular Sieves |
|---|---|---|---|
| **Dehydrated Liquid** | | | |
| Water Content | 20 ppm by weight | 10 ppm by weight | 1 ppm by weight |
| **Consumption** | | | |
| Recovery Gas | 45 normal $m^3$/hour | 45 normal $m^3$/hour | 5600 normal $m^3$/hour |
| Fuel Gas | 13 normal $m^3$/hour | 13 normal $m^3$/hour | 130 normal $m^3$/hour |
| Cooling Water | 5 tons/hour | 5 tons/hour | 95 ton/hour |
| Power | 4 kw/hour | 5.5 kw/hour | – |
| **Dehydrating Agent** | 20 kg/hour | 20 kg/hour | change every two years |

The results in Table 3 indicate that the first and second embodiments permit remarkably reducing the amounts of the recovery gas and the fuel gas used in the liquid dehydrating agent recovery device, as compared with the conventional case in which the molecular sieves are used.

In the second embodiment described above, the two sections each comprising the mixer and the liquid/liquid separator are arranged, but three or more of the similar sections may be disposed so that the

9

liquid dehydrating agent separated from the separator in the downstream section may be fed to the mixer in the upstream section.

## Claims

1. A process for dehydrating a body of liquid, characterized in that a liquid dehydrating agent (4) and a liquid to be dehydrated (1) are mixed in a mixer (2) so as to cause the water part of the liquid (1) to be absorbed by the liquid dehydrating agent (4), then the liquid (3) freed from water part and the liquid dehydrating agent (7) having absorbed the water part are separated from each other in a separator (5) and subsequently the separated liquid dehydrating agent (7) is recovered by the recovery device (8) so that the recovered liquid dehydrating agent (4) can be used by recirculation as a liquid dehydrating agent (4) for supply to the mixer (2).

2. A process according to claim 1, characterized in that two stages, each having a mixer (2, 2') and a separator (5, 5') are arranged in series, so that the liquid dehydrating agent (13) separated by the separator (5') at the second section is supplied to the mixer (2) at the first section and the liquid dehydrating agent (7) separated by separator (5) at the first section is recovered by the recovery device (8) and the liquid dehydrating agent (9) thus recovered is supplied to mixer (2') at the second section, thus dehydrating the liquid (1) in a stepwise manner.

3. A process according to claim 1 or 2, characterized in that the liquid dehydrating agent (4, 7, 9, 13) for use is triethylene glycol, diethylene glycol, monoethylene glycol, tetraethylene glycol and/or glycerol.

4. An apparatus suitable for carrying out the process of claims 1 to 3 comprising
   - a mixer (2) for mixing a liquid dehydrating agent (4) with a liquid (1) to be dehydrated,
   - a separator (5) for separating liquid dehydrating agent (4) and dehydrated liquid (1) in the resulting mixture (3) from each other,
   - a recovery device (8) for recovering the separated liquid dehydrating agent (7), which has been forwarded from the separator (5), and
   - a device for feeding the recovered liquid dehydrating agent (4) to mixer (2), which apparatus is characterized in that
   the separator (5) is arranged so that mixture (3) is forwarded from mixer (2) to the separator (5) and in that the separator (5) is any of a separator in which a difference between gravities is utilized, a parallel plate separator packed with plate-shaped contents, a corrugated plate separator, a cohesion separator called a coalescer, a cohesion separator in which electrodes are used, and a combination thereof.

5. The apparatus according to claim 4, characterized in that mixer (2) is any of a liquid/liquid mixing valve, a static mixer, a liquid/liquid mixing nozzle and a combination thereof.

6. The apparatus according to any of claim 4 or 5, characterized in that recovery device (8) is a dehydrator which is used to remove moisture from a gas.

7. The apparatus according to any of claims 4 to 7, characterized in that plural sections each comprising a mixer (2, 2') and a separator (5, 5') are arranged in series so that the liquid dehydrating agent (13) separated in the separator (5') on a downstream side may be fed to the mixer (2) on an upstream side.

## Patentansprüche

1. Verfahren zur Entwässerung einer flüssigen Substanz, dadurch gekennzeichnet, daß ein flüssiges Entwässerungsmittel (4) und eine zu entwässernde Flüssigkeit (1) in einem Mixer (2) miteinander vermischt werden, so daß dadurch der Wasseranteil der Flüssigkeit (1) von dem flüssigen Entwässerungsmittel (4) absorbiert werden kann, dann die vom Wasseranteil befreite Flüssigkeit (3) und das flüssige Entwässerungsmittel (7), welches den Wasseranteil absorbiert hat, in einem Abscheider (5) voneinander getrennt werden und sodann das abgetrennte flüssige Entwässerungsmittel (7) durch eine Wiedergewinnungsvorrichtung (8) rückgewonnen wird, so daß das rückgewonnene flüssige Entwässerungsmittel (4) über Rückführung als flüssiges Entwässerungsmittel (4) zur Einführung in den Mixer (2) verwendet werden kann.

EP 0 364 671 B1

2. Verfahren nach Anspruch 1, dadurch gekennzeichnet, daß 2 Stufen mit jeweils einem Mixer (2, 2') und einem Abscheider (5, 5') hintereinander angeordnet sind, so daß das im zweiten Abschnitt vom Abscheider (5') abgetrennte flüssige Entwässerungsmittel (13) in den Mixer (2) im ersten Abschnitt eingeleitet und das vom Abscheider (5) im ersten Abschnitt abgetrennte flüssige Entwässerungsmittel (7) von der Wiedergewinnungsvorrichtung (8) rückgewonnen wird und das so rückgewonnene flüssige Entwässerungsmittel (9) in den Mixer (2') im zweiten Abschnitt eingeleitet wird, wodurch die Flüssigkeit (1) schrittweise entwässert wird.

3. Verfahren nach Anspruch 1 oder 2, dadurch gekennzeichnet, daß das verwendete flüssige Entwässerungsmittel (4, 7, 9, 13) Trieethylenglycol, Diethylenglycol, Monoethylenglycol, Tetraetylenglycol und /oder Glyzerin ist.

4. Vorrichtung zur Durchführung des Verfahrens nach den Ansprüchen 1-3, mit
   - einem Mixer (2) zum vermischen eines flüssigen Entwässerungsmittels (4) mit einer zu entwässernden Flüssigkeit (1),
   - einem Abscheider (5) zur gegenseitigen Abtrennung des flüssigen Entwässerungsmittels (4) und der entwässerten Flüssigkeit (1) in der erhaltenen Mischung (3),
   - einer Rückgewinnungsvorrichtung (8) zur Rückgewinnung des abgetrennten, vom Abscheider (5) stammenden flüssigen Entwässerungsmittels (7), und einer Vorrichtung zur Einleitung des rückgewonnenen flüssigen Entwässerungsmittels (4) in den Mixer (2),
   dadurch gekennzeichnet, daß
   der Abscheider (5) so eingerichtet ist, daß die Mischung (3) vom Mixer (2) zum Abscheider (5) gelangt, und dadurch, daß der Abscheider (5) irgendeine Abscheider ist, in welchem Schwerkraftunterschiede ausgenutzt werden, ein mit plattenförmiger Füllung bestückter Parallelplatten - Abscheider, ein Abscheider mit gewellten Platten, ein als sogenannter Koaleszer bezeichneter Kohäsionsabscheider, ein Kohäsionsabscheider mit Verwendung von Elektoden und eine Kombination davon.

5. Vorrichtung nach Anspruch 4, dadurch gekennzeichnet, daß der Mixer (2) irgendein Vertreter aus der Gruppe Flüssigkeit/Flüssigkeits-Mischventil, statischer Mixer, Flüssigkeit/Flüssigkeits-Mischdüse und eine Kombination davon ist.

6. Vorrichtung nach jedem der Ansprüche 4 oder 5, dadurch gekennzeichnet, daß die Rückgewinnungsvorrichtung (8) ein zur Entfernung von Feuchtigkeit aus Gas verwendetes Entwässerungsverrichtung ist.

7. Vorrichtung nach jedem der Ansprüche 4-7, dadurch gekennzeichnet, daß mehrere jeweils einen Mixer (2, 2') und einen Abscheider (5, 5') umfassende Abschnitte hintereinander so angeordnet sind, daß das im Abscheider (5') abstromseitig abgetrennte Entwässerungsmittel für die Flüssigkeit aufstromseitig in den Mixer (2) eingeleitet werden kann.

**Revendications**

1. Procédé pour assécher une masse de liquide, caractérisé en ce qu'on mélange un agent (4) d'assèchement du liquide et un liquide devant être asséché (1), dans un mélangeur (2) de manière à provoquer l'absorption de la partie formée d'eau du liquide (1) par l'agent (4) d'assèchement du liquide, puis le liquide (3) libéré de la partie formée d'eau et l'agent (7) d'assèchement du liquide, qui a absorbé la partie formée d'eau, sont séparés l'un de l'autre dans un séparateur (5), puis l'agent séparé (7) d'assèchement du liquide est récupéré au moyen du dispositif de récupération (8) de sorte que l'agent récupéré (4) d'assèchement du liquide peut être utilisé moyennant sa recirculation en tant qu'agent (4) d'assèchement du liquide pour son envoi au mélangeur (2).

2. Procédé selon la revendication 1, caractérisé en ce que deux étages comprenant chacun un mélangeur (2,2') et un séparateur (5,5') sont montés en série de sorte que l'agent (13) d'assèchement du liquide, qui est séparé par le séparateur (5') situé dans la seconde section, est envoyé au mélangeur (2) situé dans la première section et que l'agent (7) d'assèchement du liquide, qui est séparé par le séparateur (5) situé dans la première section, est récupéré par le dispositif de récupération (8) et que l'agent (9) d'assèchement du liquide, ainsi récupéré, est envoyé au mélangeur (2') situé dans la seconde section, ce qui permet d'assécher le liquide (1) d'une manière échelonnée.

11

3. Procédé selon la revendication 1 ou 2, caractérisé en ce que l'agent utilisé (4,7,9,13) d'assèchement du liquide est du triéthylèneglycol, du diéthylèneglycol, du monoéthylèneglycol, du tétraéthylèneglycol et/ou du glycérol.

4. Dispositif convenant pour la mise en oeuvre du procédé selon les revendications 1 à 3, comprenant
   - un mélangeur (2) servant à mélanger un agent (4) d'assèchement d'un liquide et un liquide (1) devant être asséché,
   - un séparateur (5) servant à séparer l'agent (4) d'assèchement du liquide et le liquide asséché (1) dans le mélange résultant (3),
   - un dispositif de récupération (8) pour récupérer l'agent séparé (7) d'assèchement du liquide, qui a été délivré par le séparateur (5), et
   - un dispositif pour envoyer l'agent récupéré (4) d'assèchement du liquide au mélangeur (2),
   - le dispositif étant caractérisé en ce que
   le séparateur (5) est agencé de telle sorte que le mélange (3) est transféré du mélangeur (2) au séparateur (5) et que le séparateur (5), dans lequel on utilise une différence entre des poids spécifiques, est n'importe lequel des dispositifs suivants : un séparateur à plaques parallèles garni par un garnissage en forme de plaques, un séparateur à plaques ondulées, un séparateur à cohésion désigné sous le terme de coalesceur sont utilisées, un séparateur à cohésion dans des électrodes, et une combinaison de tels dispositifs.

5. Dispositif selon la revendication 4, caractérisé en ce que le mélangeur (2) est n'importe lequel des dispositifs suivants : une valve de mélange liquide/liquide, un mélangeur statique, une buse de mélange liquide/liquide et une combinaison de tels dispositifs.

6. Dispositif selon l'une quelconque des revendications 4 ou 5, caractérisé en ce que le dispositif de récupération (8) est un dessicateur, qui est utilisé pour éliminer l'humidité d'un gaz.

7. Dispositif selon l'une quelconque des revendications 4 à 6, caractérisé en ce que plusieurs sections comprenant chacune un mélangeur (2,2') et un séparateur (5,5') sont montés en série de sorte que l'agent (13) d'assèchement du liquide, qui est séparé dans le séparateur (5') situé sur le côté aval peut être envoyé au mélangeur (2) situé sur le côté amont.

# F I G . 1

# F I G . 2

# FIG. 3

PRIOR ART.